(19)

Europäisches
Patentamt
European
Patent Office
Office européen
des brevets

(11) **EP 2 042 855 A1**

(12) **EUROPEAN PATENT APPLICATION**
published in accordance with Art. 153(4) EPC

(43) Date of publication:
**01.04.2009 Bulletin 2009/14**

(21) Application number: **07767631.0**

(22) Date of filing: **26.06.2007**

(51) Int Cl.:
***G01N 21/35*** (2006.01)

(86) International application number:
**PCT/JP2007/062825**

(87) International publication number:
**WO 2008/001785 (03.01.2008 Gazette 2008/01)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **26.06.2006 JP 2006175686**

(71) Applicants:
 • **Toshiba Solutions Corporation**
   **Tokyo 105-6691 (JP)**
 • **Eisai R&D Management Co., Ltd.**
   **Tokyo 112-8088 (JP)**
 • **Advanced Infrared Spectroscopy Co., Ltd.**
   **Tokyo 193-0835 (JP)**

(72) Inventors:
 • **TAKATA, Munehiko**

   **(JP)**

 • **MOMOI, Kazuhisa**
   **Kakamigahara-shi, Gifu 501-6195 (JP)**
 • **KOJIMA, Kiyotaka**
   **Saitama 367-0198 (JP)**
 • **ITO, Shinichi**
   **Kakamigahara-shi, Gifu 501-6195 (JP)**
 • **NISHIZAWA, Seizi**

   **(JP)**

 • **WATANABE, Mitsuo**

   **(JP)**

 • **The other inventors have agreed to waive their entitlement to designation.**

(74) Representative: **HOFFMANN EITLE**
   **Patent- und Rechtsanwälte**
   **Arabellastraße 4**
   **81925 München (DE)**

(54) **SPECIMEN INSPECTING APPARATUS, AND SPECIMEN INSPECTING METHOD**

(57)    A sample inspection apparatus includes an oscillator 14-2 which generates light rays of terahertz radiation, an optical system 14-3 which guides the terahertz radiation to a drug, a detection unit 16-4 which detects the terahertz radiation transmitted through an object as an electrical signal, and a computer 20 which determines by analysis whether the sample contains heterogeneous or foreign substances or not based on the temporal waveform of the electrical signal detected by the detection unit 16-4 and the predetermined temporal waveform indicating the component unique to the sample, or determines the spectrum from the electrical signal detected by the detection unit 16-4, extracts plural feature values from the spectrum and determines whether the drug contains heterogeneous or foreign substances or not based on the extracted feature values and the feature values extracted from the predetermined spectrum (fingerprint spectrum) due to the component unique to the drug.

FIG.1

EP 2 042 855 A1

**Description**

Technical Field

The present invention relates to a sample inspection apparatus and a sample inspection method for drugs as an example.

Background Art

In recent years, a great variety of drugs (including tablets and capsules) have often been produced in the pharmaceutical industry using the same packaging line or the same production apparatus. In this case, especially in the packaging process in the final stage, heterogeneous or foreign substances, i.e., other types of drugs, other drug components or substances, chemicals or substances other than drugs may mix in. Usually, therefore, an inspector conducts visual inspection to detect differences in drugs based on the color or shape thereof thereby to prevent the intrusion of other types of drugs or chemical components or substances other than drugs.

Also, in recent years, a chemical inspection apparatus has come to be used to process the image data obtained by an image input unit such as a CCD camera and to sort the drugs according to the difference in features such as shape, area or color.

Further, a sorting apparatus is also available to sort drugs according to the difference in the result of spectral analysis of the near infrared light reflected from the drugs using the spectrometer. This device is limited in application, however, and cannot be used in the case where the surface has the same composition such as a sugar-coated tablet.

The result of very recent research has revealed the possibility of measurement of the spectrum unique to the substance of an object to be measured by a new spectral method called terahertz time domain spectrometry, for example, using light of about 30 gigahertz to 5 terahertz called the terahertz region. According to terahertz time domain spectrometry, terahertz radiation is directed onto a sample and the terahertz waveform passing through the sample is measured by temporal analysis, and the resulting waveform is subjected to Fourier transformation thereby to produce the amplitude and phase for each frequency.

Jpn. Pat. Appln. KOKAI Publication No. 2005-114413 discloses a substance detection apparatus capable of uniformly detecting whether a specified substance is contained in an object by directing the terahertz radiation onto a predetermined part of the object.

Disclosure of Invention

The conventional method of identifying drugs by visual inspection, however, harbors the risk of overlooking. Also, in the case where the drug assumes a shape difficult to identify from the appearance, the 100% safety cannot be secured even by the image processing.

Jpn. Pat. Appln. KOKAI Publication No. 2005-114413 also discloses a method of determining whether a sample contains an intended spectrum or not by directing the terahertz radiation onto the object to be inspected and checking the output waveform. Nevertheless, this patent publication fails to disclose a specific configuration to positively detect heterogeneous drugs or chemical components and substances other than drugs.

The present invention has been achieved in view of this problem and an object thereof is to provide a sample inspection apparatus and a sample inspection method capable of positively detecting heterogeneous drugs or chemical components and substances other than drugs.

In order to achieve the above object, there is provided a sample inspection apparatus according to a first aspect of the present invention, comprising:

a terahertz radiation generation unit which generates light rays of terahertz radiation;
an optical system which guides the terahertz radiation generated by the terahertz radiation generation unit to a sample as an object to be inspected;
a detection unit which detects terahertz output radiation transmitted through or reflected from the sample as an electrical signal; and
a determination unit which determines a spectrum from the electrical signal detected by the detection unit, and determines whether the sample contains heterogeneous or foreign substances based on the particular spectrum and another predetermined spectrum (fingerprint spectrum) due to a component unique to the sample.

According to a second aspect of the present invention, there is provided a sample inspection apparatus according to a first aspect, wherein the determination unit compares a feature value extracted from the determined spectrum (fingerprint spectrum) with a feature value extracted from the predetermined spectrum (fingerprint spectrum) and based on the comparison result, determines whether the sample contains heterogeneous or foreign substances or not.

According to a third aspect of the present invention, there is provided a sample inspection apparatus according to a second aspect, wherein the feature value is selected one or any combination of strength of the spectrum, a value of the spectrum obtained by first order derivatives and a value of the spectrum obtained by high-order derivatives.

According to a fourth aspect of the present invention, there is provided a sample inspection apparatus according to a first aspect, wherein the determination unit determines whether the sample contains heterogeneous or foreign substances or not by pattern recognition of the determined spectrum (fingerprint spectrum) and the predetermined spectrum (fingerprint spectrum).

According to a fifth aspect of the present invention, there is provided a sample inspection apparatus according to any one of a first to a fourth aspects, wherein the terahertz radiation generation unit generates the light rays of the terahertz radiation as a converged light flux, and the optical system converges the light flux onto the sample.

According to a sixth aspect of the present invention, there is provided a sample inspection apparatus according to any one of a first to a fourth aspects, wherein the terahertz radiation generation unit generates the light rays of the terahertz radiation as parallel light flux, and the optical system guides the parallel light flux to the sample as it is.

According to a seventh aspect of the present invention, there is provided a sample inspection apparatus according to a sixth aspect, wherein the terahertz radiation generation unit directs the light rays of the terahertz radiation sideways through a plurality of samples.

According to an eighth aspect of the present invention, there is provided a sample inspection apparatus according to any one of a first to a seventh aspects, wherein the detection unit detects the terahertz output radiation by spectral resolution narrower than an absorption spectrum of water vapor in the air.

According to a ninth aspect of the present invention, there is provided a sample inspection apparatus according to any one of a first to a seventh aspects, wherein the detection unit detects the terahertz output radiation by spectral resolution wider than an absorption spectrum of water vapor in the air.

According to a tenth aspect of the present invention, there is provided a sample inspection apparatus according to any one of a second, third, and fifth to ninth aspects, wherein the determination unit removes an effect of an absorption peak of the water vapor from the determined spectrum at the time of calculating the feature value.

According to an eleventh aspect of the present invention, there is provided a sample inspection apparatus according to any one of a first to a tenth aspects, wherein the sample is moved in a predetermined direction by a conveyor unit.

According to a twelfth aspect of the present invention, there is provided a sample inspection method comprising the steps of:

generating light rays of terahertz radiation from a terahertz radiation generation unit;

guiding, by an optical system, the terahertz output radiation generated by the terahertz radiation generation unit to a sample as an object to be inspected;

detecting, by a detection unit, the terahertz radiation transmitted through or reflected from the object as an electrical signal; and

determining, by a determination unit, a spectrum from the electrical signal detected by the detection unit and based on the particular spectrum and another predetermined spectrum (fingerprint spectrum) due to a component unique to the sample, determining whether the sample contains heterogeneous or foreign substances.

According to a thirteenth aspect of the present invention, there is provided a sample inspection apparatus according to a twelfth aspect, wherein the determination step compares a feature value extracted from the determined spectrum (fingerprint spectrum) with a feature value extracted from the predetermined spectrum (fingerprint spectrum) and based on the comparison result, determines whether the sample contains heterogeneous or foreign substances or not.

According to a fourteenth aspect of the present invention, there is provided a sample inspection apparatus according to a twelfth aspect, wherein the feature value is defined as selected one or any combination of strength of the spectrum, a value of the spectrum obtained by first order derivatives and a value of the spectrum obtained by high-order derivatives.

According to a fifteenth aspect of the present invention, there is provided a sample inspection apparatus according to a twelfth aspect, wherein the determination step determines whether the sample contains heterogeneous or foreign substances or not by pattern recognition of the determined spectrum and the predetermined spectrum.

According to a sixteenth aspect of the present invention, there is provided a sample inspection apparatus according to any one of a twelfth to a fifteenth aspect, wherein the terahertz radiation generation step, and the optical system converges the light flux to the sample.

According to a seventeenth aspect of the present invention, there is provided a sample inspection apparatus according to any one of a twelfth to a fifteenth aspects, wherein the terahertz radiation generation step generates the light rays of the terahertz radiation as parallel light flux, and the optical system guides the parallel light flux to the sample as it is.

According to an eighteenth aspect of the present invention, there is provided a sample inspection apparatus according to a seventeenth aspect, wherein the terahertz radiation generation step directs the light rays of the terahertz radiation sideways through a plurality of samples.

According to a nineteenth aspect of the present invention, there is provided a sample inspection apparatus according to any one of a twelfth to a eighteenth aspects, wherein the detection step detects the terahertz output radiation by spectral resolution narrower than an absorption spectrum of water vapor in the air.

According to a twentieth aspect of the present invention, there is provided a sample inspection apparatus according to any one of a twelfth to a eighteenth aspects, wherein the detection step detects the terahertz output radiation by spectral resolution wider than an absorption spectrum of water vapor in the air.

According to a twenty-first aspect of the present invention, there is provided a sample inspection apparatus according to any one of a thirteenth, fourteenth, and sixteenth to twentieth aspects, wherein the determination step removes an effect of an absorption peak of the water vapor from the determined spectrum at the time of calculating the feature value.

According to a twenty-second aspect of the present invention there is provided a sample inspection apparatus according to any one of a twelfth to a twenty-first aspects, wherein the sample is moved in a predetermined direction by a conveyor unit.

According to a twenty-third aspect of the present invention, there is provided a sample inspection apparatus according to a fifth or a sixth aspect, wherein the optical system includes a plurality of optical elements arranged in matrix to guide the light rays of the terahertz radiation to the samples arranged in a plurality of lines.

According to a twenty-fourth aspect of the present invention, there is provided a terahertz radiation generation unit which generates light rays of terahertz radiation; a sample inspection apparatus comprising:

an optical system which guides the terahertz radiation generated by the terahertz radiation generation unit to a sample as an object to be inspected;
a detection unit which detects terahertz output radiation transmitted through or reflected from the sample as an electrical signal; and
a determination unit which determines by analysis whether the sample contains heterogeneous or foreign substances, based on a temporal waveform of the electrical signal detected by the detection unit and a predetermined temporal waveform indicating a component unique to the sample.

According to an twenty-fifth aspect of the present invention, there is provided a sample inspection apparatus according to a twenty-fourth aspect, wherein the determination unit determines whether the sample contains heterogeneous or foreign substances or not by pattern recognition of the shape of the temporal waveform of the electrical signal detected by the detection unit and the shape of the predetermined temporal waveform indicating the component unique to the sample.

According to a twenty-sixth aspect of the present invention, there is provided a sample inspection apparatus according to a twenty-fourth or a twenty-fifth aspect, wherein the terahertz radiation generation unit generates the light rays of the terahertz radiation as a converged light flux, and the optical system converges the light flux onto the sample.

According to a twenty-seventh aspect of the present invention, there is provided a sample inspection apparatus according to a twenty-fourth or a twenty-fifth aspect, wherein the terahertz radiation generation unit generates the light rays of the terahertz radiation as parallel light flux, and the optical system guides the parallel light flux to the sample as it is.

According to a twenty-eighth aspect of the present invention, there is provided a sample inspection apparatus according to a twenty-fourth or a twenty-fifth aspect, wherein the sample is moved in a predetermined direction by a conveyor unit.

According to a twenty-ninth aspect of the present invention, there is provided a sample inspection method comprising the steps of:

generating light rays of terahertz radiation from a terahertz radiation generation unit;
guiding, by an optical system, the terahertz output radiation generated by the terahertz radiation generation unit to a sample as an object to be inspected;
detecting, by a detection unit, the terahertz radiation transmitted through or reflected from the object as an electrical signal; and
determining by analysis, by a determination unit, whether the sample contains heterogeneous or foreign substances, based on a temporal waveform of the electrical signal detected by the detection unit and a predetermined temporal waveform indicating a component unique to the sample.

According to a thirtieth aspect of the present invention, there is provided a sample inspection apparatus according to a twenty-ninth aspect, wherein the determination step determines whether the sample contains heterogeneous or foreign substances or not by pattern recognition of the temporal waveform of the electrical signal detected in the detection step and the predetermined temporal waveform indicating the component unique to the sample.

According to a thirty-first aspect of the present invention, there is provided a sample inspection apparatus according to a twenty-ninth or a thirtieth aspect, wherein the terahertz radiation generation step generates the light rays of the terahertz radiation as a converged light flux, and the optical system converges the light flux onto the sample.

According to a thirty-second aspect of the present invention, there is provided a sample inspection apparatus according to a twenty-ninth or a thirtieth aspect, wherein the terahertz radiation generation step generates the light rays of the terahertz radiation as parallel light flux, and the optical system guides the parallel light flux to the sample as it is.

According to a thirty-third aspect of the present invention, there is provided a sample inspection apparatus according to a twenty-ninth or a thirtieth aspect, wherein the sample is moved in a predetermined direction by a conveyor unit.

Brief Description of Drawings

FIG. 1 is a diagram showing the configuration of a drug inspection system according to an embodiment of the invention.

FIG. 2A is a diagram showing the behavior of the terahertz radiation using converged light flux.

FIG. 2B is a diagram showing the behavior of the terahertz radiation using the converged light flux.

FIG. 3A is a diagram showing the ununiformity of drug components contained in a drug.

FIG. 3B is a diagram showing the thickness feature of drugs.

FIG. 4A is a diagram showing the manner in which parallel light flux is directed onto the whole drug.

FIG. 4B is a diagram showing the manner in which the parallel light flux is directed onto the whole drug.

FIG. 4C is a diagram showing the manner in which the parallel light flux is directed onto the whole drug.

FIG. 5 is a diagram showing the manner in which the terahertz radiation is directed onto plural drugs simultaneously using the parallel light flux.

FIG. 6A is a diagram showing the manner in which the parallel light flux is radiated as an output from just above the drug.

FIG. 6B is a diagram showing the manner in which the parallel light flux is radiated as an output just from the side of the drug.

FIG. 6C is a diagram showing the configuration in which plural drugs are irradiated from above.

FIG. 7A is a diagram showing the manner in which the parallel light flux is radiated as an output from just the side of the drug.

FIG. 7B is a diagram showing the manner in which the parallel light flux is radiated as an output from just the side of the drug.

FIG. 8 is a diagram showing a modification of the drug inspection apparatus shown in FIG. 1.

FIG. 9 is a diagram showing the configuration of a blister packaging machine as an application of the drug inspection apparatus according to this embodiment.

FIG. 10 is a diagram showing a detailed algorithm executed for identifying heterogeneous drugs at the time of inspection of heterogeneous drugs.

FIG. 11 is a diagram showing a temporal waveform input.

FIG. 12 is a diagram showing a field strength spectrum obtained by Fourier transformation of the input waveform.

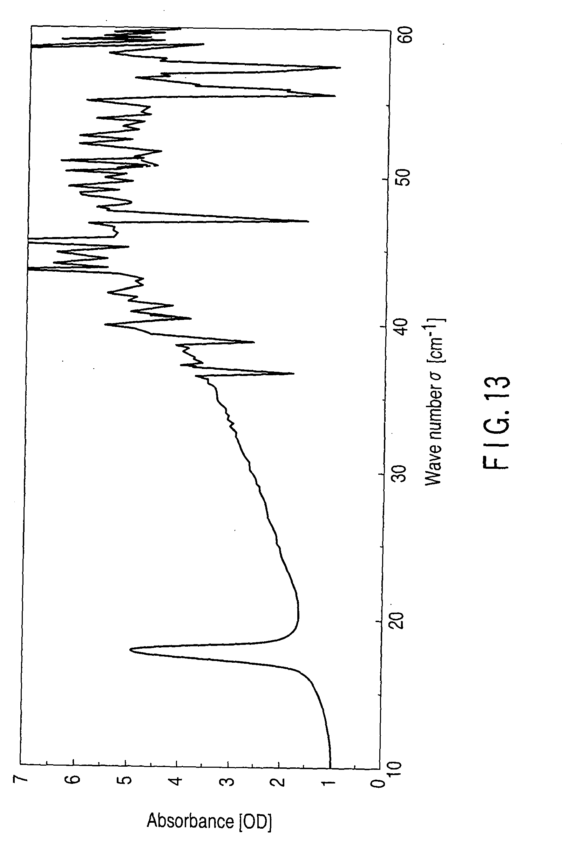

FIG. 13 is a diagram showing an example of a light absorbance spectrum.

FIG. 14 is a diagram showing an absorbance peak of water vapor appearing in a transmittance spectrum.

FIG. 15 is a diagram showing an example of a feature value contained in the absorbance spectrum.

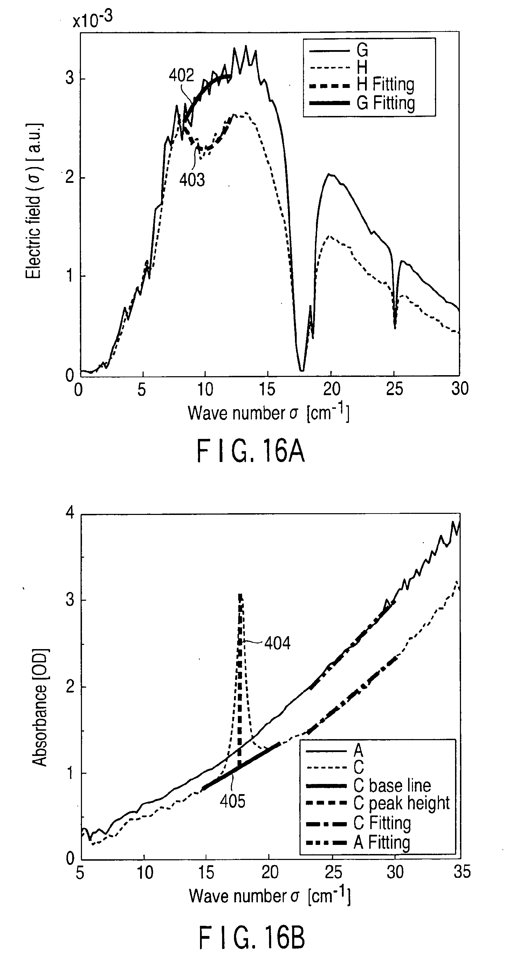

FIG. 16A is a diagram showing an example of the feature value contained in the field strength spectrum.

FIG. 16B is a diagram showing an example of the feature value contained in the absorbance spectrum.

FIG. 17 is a diagram showing the detail of a heterogeneity learning algorithm to generate a parameter from teacher data prepared in advance.

FIG. 18 is a diagram for explaining another embodiment.

FIG. 19 is a diagram showing a modification of the configuration of FIG. 8.

FIG. 20 is a diagram showing another modification of the configuration of FIG. 1 or 8.

FIG. 21 is a diagram showing an example of a temporal waveform.

FIG. 22 is a diagram showing an example of the temporal waveform.

FIG. 23 is a diagram showing an example of the temporal waveform.

Best Mode for Carrying Out the Invention

First, the invention will be briefly explained.

The sample inspection apparatus according to this invention includes a terahertz light radiation unit constituting a terahertz radiation generation unit for generating terahertz radiation of 30 gigahertz to 5 terahertz, an optical system for guiding the generated light to a sample constituting an object to be inspected, a detection unit for detecting the terahertz output radiation transmitted through or reflected from the sample as an electrical signal, and a determination unit for determining the optical spectrum from the detected electrical signal and determining whether the sample contains a heterogeneous or foreign substance, based on the particular optical spectrum and another optical spectrum due to a predetermined component unique to the sample.

Samples constituting the object to be inspected include, but are not limited to, drugs or reagents such as tablets, powder, granules, capsules, suppositories and cartridges, medical devices such as syringes, catheters and transfusion bags, sanitary products such as bandages, absorbent cotton, swabs, straps, contraceptive devices and feminine hygiene products, soap, cosmetics such as soap and lipstick, confectionery such as chewing gum, candy, soda pop and chocolate, foodstuffs such as salt, sugar, flour, cereal and tea, and processed foods such as pasta.

The terahertz light radiation unit includes a radiation unit for radiating the white light with plural different wavelengths superposed such as a femtosecond system for generating the terahertz radiation using a femtosecond laser or a mercury lamp light source of a Fourier transform infrared spectrometer (FTIR) or a radiation unit for outputting plural different wavelengths by changing the wavelength of a monochromatic wavelength variable light source or the like.

Also, the terahertz output radiation includes the radiation transmitted through (or absorbed by) the sample and the radiation reflected from the sample. In the transmission method, assume that the sample is packaged with a film of, for example, polyvinyl chloride (PVC) or polypropylene (PP). The spectrum is obtained through these materials but not substantially affected by them. The spectrum data sampled in advance may be used as reference data. In similar fashion, disturbance factors such as moisture contained in the sample or the water vapor existing in the air can be removed by measuring and inspecting the absorption spectrum of the water vapor. It should be noted that the determination unit compares the waveform of the spectrum obtained by processing the detected electrical signal with the waveform of the spectrum (fingerprint spectrum) by taking the component unique to the sample as an object to be inspected, and in the case where any difference exists, determines that the object is a heterogeneous or foreign substance.

As an alternative, the determination unit compares the strength of the spectrum obtained by processing the detected electrical signal with the strength of the spectrum by taking the component unique to the sample as an object to be inspected, and in the case where any difference exists therebetween, determines that the sample contains a heterogeneous or foreign substance.

As another alternative, the determination unit compares the first order derivatives of the spectrum obtained by processing the detected electrical signal with the first order derivatives of the spectrum by taking the component unique to the sample as an object to be inspected, and in the case where any difference exists therebetween, determines that the sample contains a heterogeneous or foreign substance.

As still another alternative, the determination unit compares the higher-order derivatives of the spectrum obtained by processing the detected electrical signal with the higher-order derivatives of the spectrum by taking the component unique to the sample as an object to be inspected, and in the case where any difference exists therebetween, determines that the sample contains a heterogeneous or foreign substance.

As yet another alternative, the determination unit determines that the sample contains a heterogeneous or foreign substance based on any combination of the strength of the spectrum obtained by processing the detected electrical signal, the first order derivatives and the higher-order derivatives.

It should be noted that the determination as to whether a heterogeneous or foreign substance is contained or not can be made also directly from the detected electrical signal without the spectrum. In this case, the sample inspection apparatus is configured of a terahertz light radiation unit as a terahertz radiation generation unit for generating terahertz radiation of 30 gigahertz to 5 terahertz in frequency, an optical system for guiding the generated light to the sample constituting the object to be inspected, a detection unit for detecting the terahertz output radiation transmitted through or reflected from the sample as an electrical signal, and a determination unit for determining by analysis whether the sample contains a heterogeneous or foreign substance based on the temporal waveform of the electrical signal detected by the detection unit and the temporal waveform indicating the predetermined component unique to the sample. The temporal waveform is defined as a measurement of the change in the field strength of the terahertz radiation with time.

The aforementioned determination includes the process of determination by analyzing whether a heterogeneous or foreign substance is contained or not by the pattern recognition of the shape of the temporal waveform of the detected electrical signal and the temporal waveform indicating the predetermined component unique to the sample.

Embodiments of the invention will be explained in detail below with reference to the drawings.

(First embodiment)

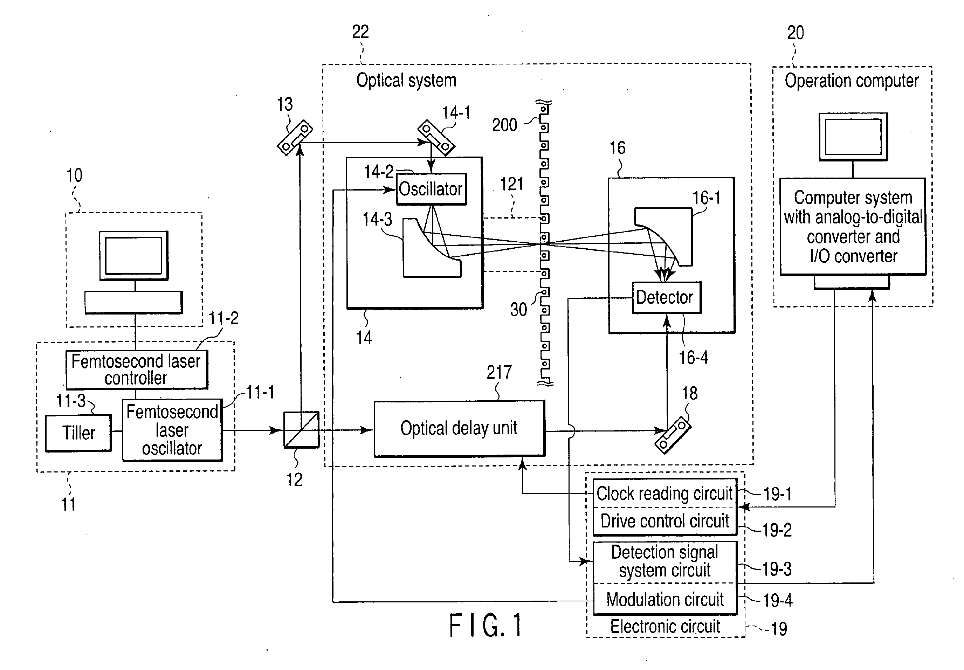

FIG. 1 is a diagram showing the configuration of the drug inspection apparatus according to a first embodiment of the invention representing an example of the transmission method based on the terahertz time domain spectrometry.

A femtosecond laser unit 11 for generating femtosecond light pulses includes a femtosecond laser oscillator 11-1, a femtosecond laser controller 11-2 and a tiller 11-3. A laser control computer 10 controls the operation of the femtosecond later unit 11. A beam splitter 12 separates the femtosecond laser light from the femtosecond laser oscillator 11-1 into two beams. Optical elements 13, 14-1 such as a mirror guide one of the separated femtosecond laser light to a terahertz radiation generation unit 14. The terahertz radiation generation unit 14 includes an oscillator 14-2 for generating terahertz radiation based on the femtosecond laser light and an optical element 14-3 for guiding the terahertz radiation from the oscillator 14-2 to the output unit. A terahertz radiation detection unit 16 includes a detector 16-4 for detecting and converting the terahertz radiation transmitted through the drug transported by a drug conveyor 15 into an electrical signal, and an optical element 16-1 for guiding the terahertz radiation to the detector 16-4. The terahertz radiation generation unit 14 and the terahertz radiation detection unit 16 are arranged inside an optical system 22. The dotted line 121 designates a converged light flux portion indicating that the light rays of the terahertz radiation, after being output from the terahertz radiation generation unit 14, are converged on the drug. High-strength terahertz radiation can be produced by converging the light rays of the terahertz radiation.

The other beam of the femtosecond laser light separated by the beam splitter 12 enters and is delayed by an optical delay element 217. An optical element 18 such as a mirror is to guide the delayed femtosecond laser light to the detector 16-4 of the terahertz radiation detection unit 16. The femtosecond laser light thus separated is called the probe light and used to measure the change of the field strength of the terahertz radiation with time while shifting the timing of reaching the terahertz radiation detection unit 16 with the optical path length changed by the optical delay unit 217.

The optical delay unit 217 may be replaced with other means as long as the timing can be adjusted.

An electronic circuit 19 includes a clock reading circuit 19-1, a drive control circuit 19-2, a detection signal system circuit 19-3 and a modulation circuit 19-4. The clock reading circuit 19-1 reads the clock signal from an operation computer 20. The drive control circuit 19-2 drives a movable mirror of the optical delay unit 217. The detection signal system circuit 19-3 executes the required process for the electrical signal detected by the detector 16-4. The modulation circuit 19-4 controls the operation of the oscillator 14-2.

The operation computer 20 measures the temporal change of the field strength of the terahertz radiation processed in the electronic circuit 19, and by thus obtaining the spectrum by Fourier transform, determines whether the drug conveyed by a drug conveyor 200 contains heterogeneous drugs or not.

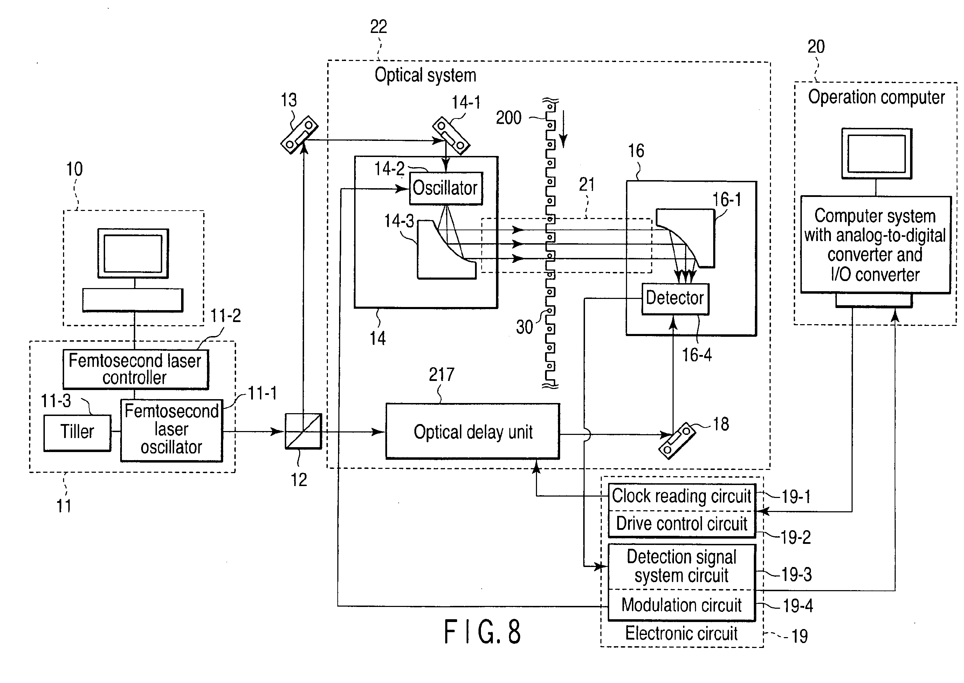

FIG. 8 is a diagram showing a modification of the drug inspection apparatus shown in FIG. 1, wherein the terahertz radiation, after being output from the terahertz radiation generation unit 14, forms parallel light flux until it reaches the terahertz radiation detection unit 16. Reference number 21 designates the parallel light flux.

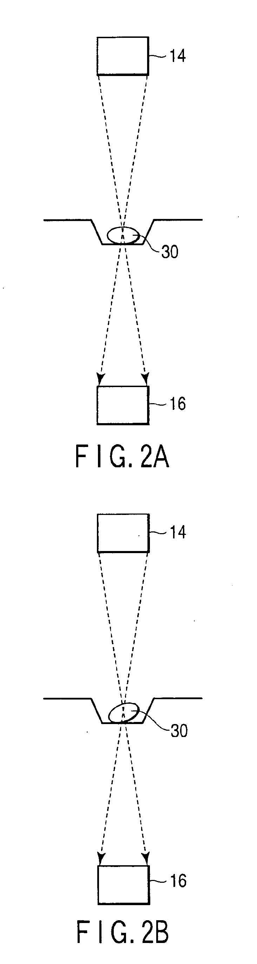

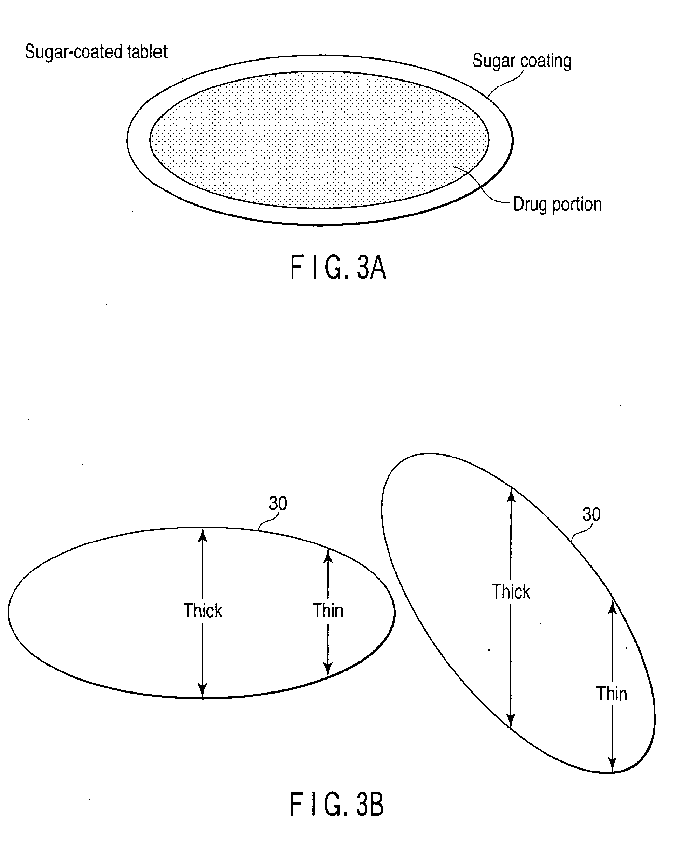

As shown in FIG. 2A, the terahertz radiation can be concentrated at a point by use of the converged light flux. In the case where the drug is coated with sugar as shown in FIG. 3A, however, it may be difficult to detect the composition to check whether heterogeneous drug components are contained in the drug as a whole. Also, the packaged drug may be tilted in the package as shown in FIG. 2B. In the case where the drug has a thick central portion and a thinner peripheral portion as shown in FIG. 3B, the detection value is changed by the tilt of the drug, thereby often making it difficult to detect the components to check whether heterogeneous drugs or chemical components are contained or not.

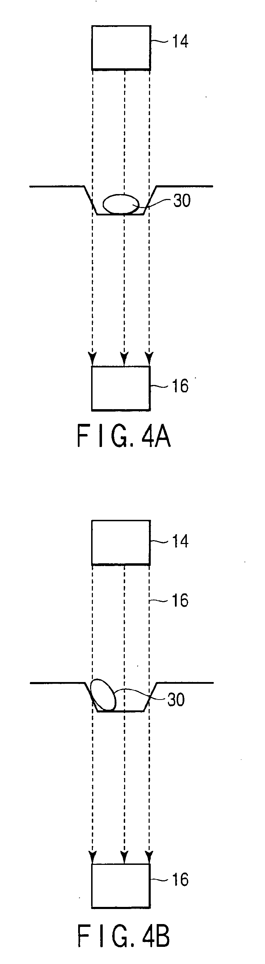

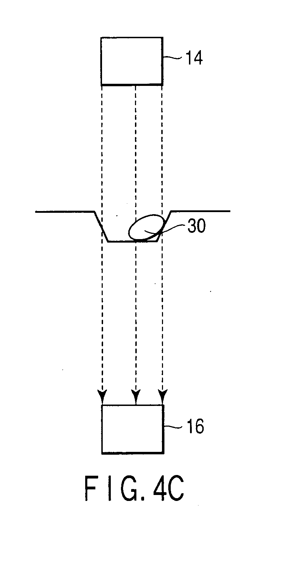

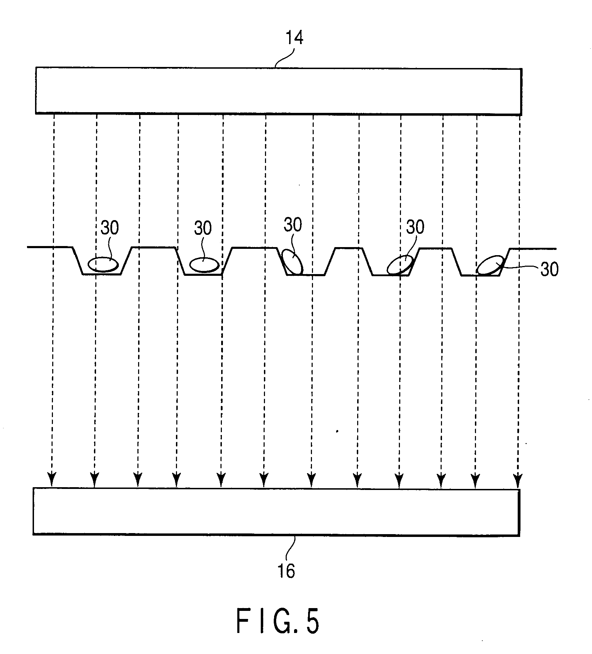

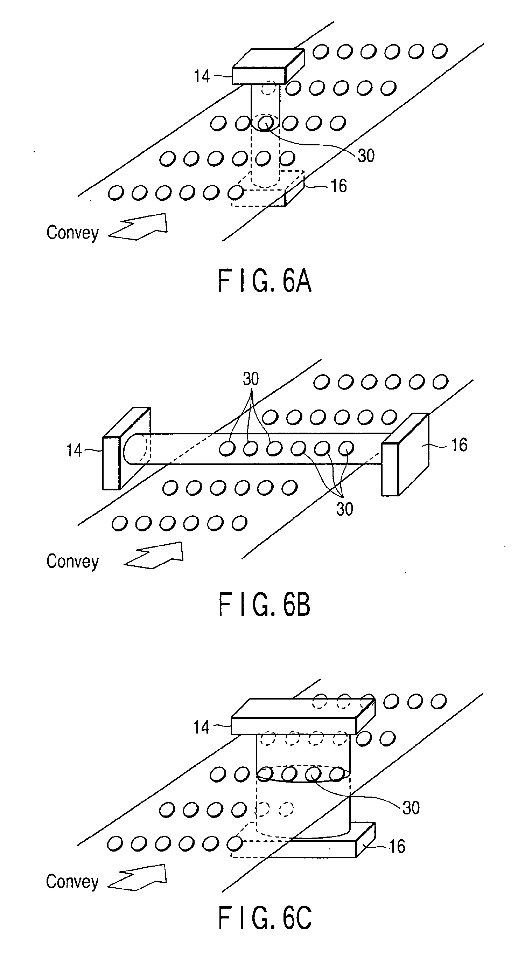

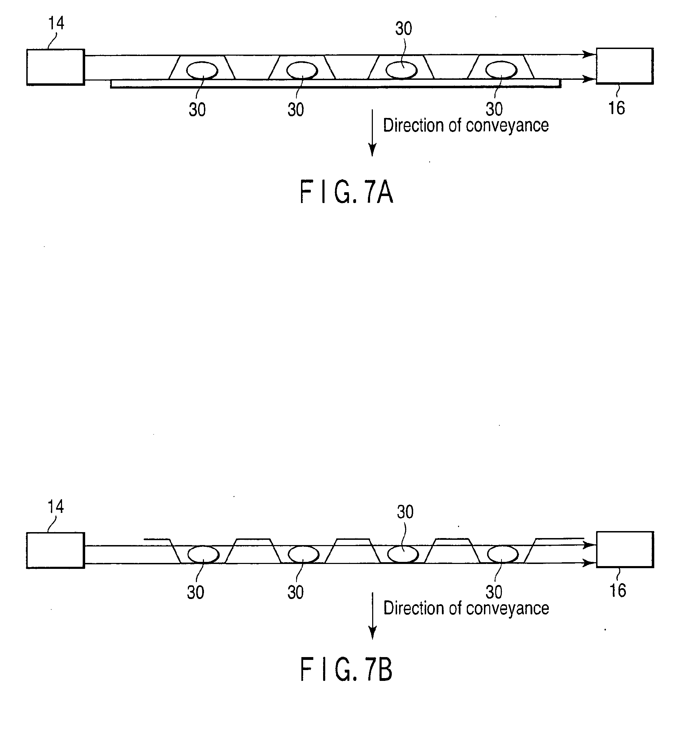

In such a case, the use of the parallel light flux as shown in FIGS. 4A to 4C makes it possible to radiate the terahertz radiation over the whole drug without regard to the tilt thereof. Also, by using the parallel light flux, as shown in FIG. 5, the terahertz radiation can be directed onto plural pieces of the drug at the same time. Further, in the case where the parallel light flux of the terahertz radiation is emitted and transmitted sideways through the plural pieces of the drug as shown in FIGS. 6B, 7A, plural pieces of the drug arranged over a wide area can be inspected at the same time with the same terahertz radiation generation unit as in FIG. 6A. As a result, a great amount of drug can be inspected at high speed without installing plural terahertz radiation generation units or terahertz radiation detection units. It should be noted that FIG. 6C is a modification of the configuration shown in FIG. 6A, in which plural pieces of the drug 30 are irradiated from above. Also, FIG. 7B shows the measurement conducted without any aluminum sheet.

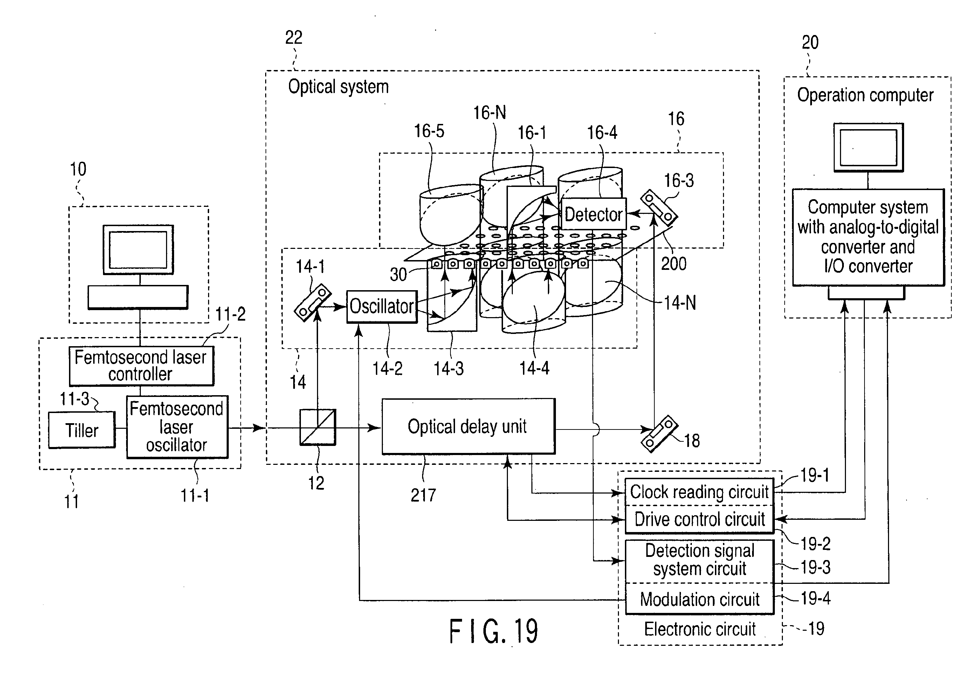

FIG. 19 is a diagram showing a modification of the configuration of FIG. 8. The configuration shown in FIG. 8 represents a one-channel drug inspection system for inspecting plural pieces of the drug in alignment. In order to inspect a great number of pieces of the drug at high speed, however, it is desirable to measure pieces of the drug in plural lines at the same time. FIG. 19 is a diagram showing the configuration of a multi-channel drug inspection system. In this case, as shown in FIG. 19, in order to guide the terahertz radiation from the oscillator 14-2 to the plural lines of the pieces of the drug 30 arranged on the conveyor unit of the drug conveyor 200, the terahertz radiation generation unit 14 includes plural optical elements 14-3, 14-4, ... , 14-N in matrix. Also, in order to guide the terahertz radiation to the detector 16-4 after being transmitted through the plural lines of the pieces of the drug 30, the terahertz radiation detection unit 16 correspondingly includes plural optical elements 16-1, 16-5, ... , 16-N arranged in matrix. Similarly, optical elements 18, 16-3 are provided to guide the femtosecond laser light delayed in the optical delay unit 217 to the detector 16-4.

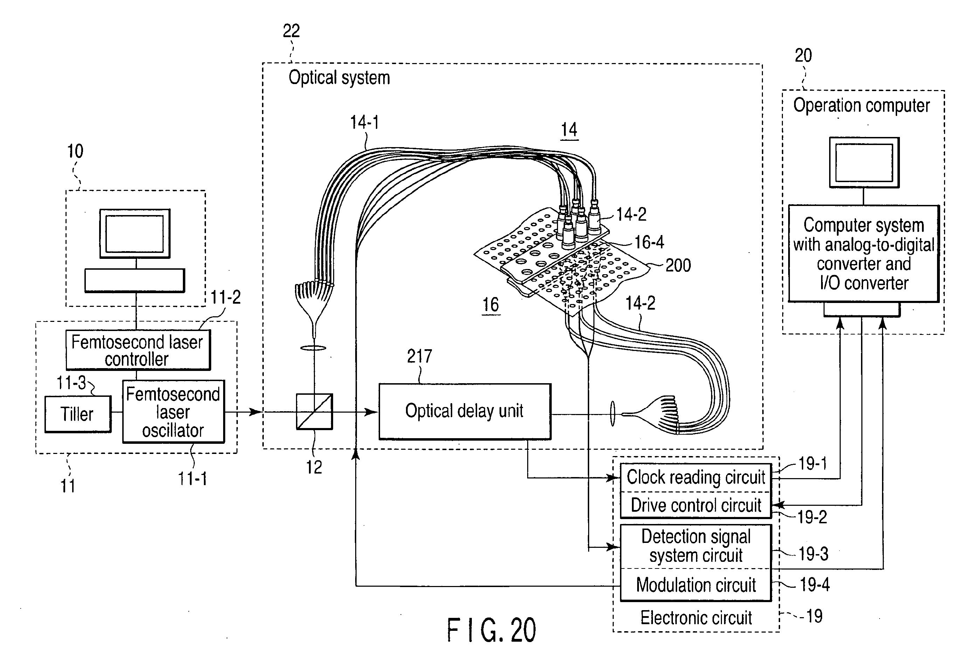

FIG. 20 is a diagram showing another modification of the configuration shown in FIG. 1 or 8. In the configuration shown in FIG. 1 or 8, the laser light separated by the beam splitter 12 is guided to the oscillator 14-2 by the optical elements 13, 14-1 such as mirrors. Also, the laser light delayed in the optical delay unit 217 is guided to the detector 16-4 by the optical element 18 such as a mirror. In the configuration shown in FIG. 20, on the other hand, the optical elements 13, 14-1, 18 are not used, but the laser light is guided by use of optical fibers 14-1, 14-2 between the beam splitter 12 and the oscillator 14-2 and between the optical delay unit 217 and the detector 16-4.

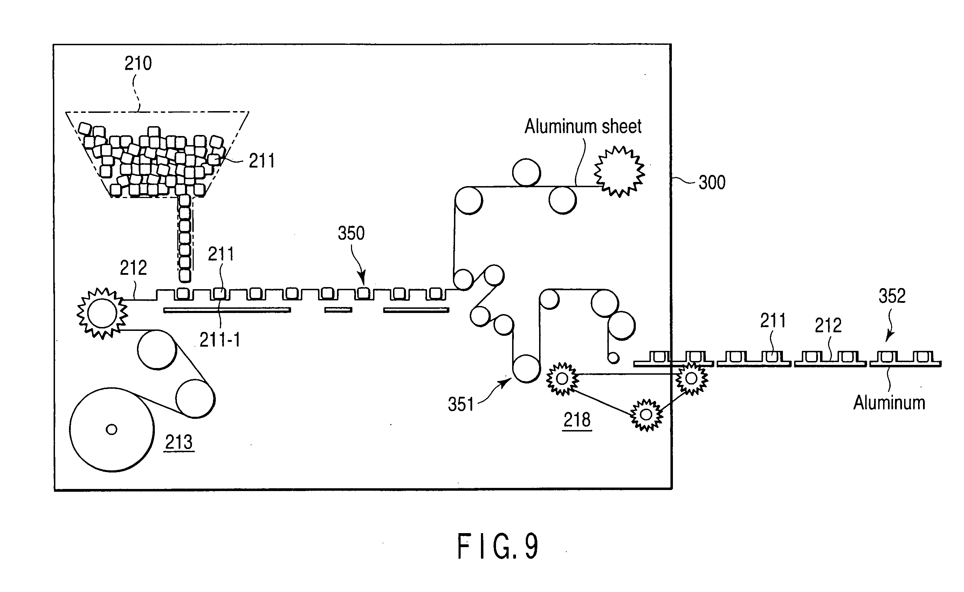

Next, a specific flow of the process according to the first embodiment will be explained with reference to FIG. 9. FIG. 9 shows the configuration of a (press through package) drug blister packaging machine 300 used with the drug inspection apparatus according to this embodiment. In the transmission method as shown in FIGS. 1 and 8, the drug packaging machine 300 is installed at a place 350, for example. In the reflection method, on the other hand, the drug packaging machine 300 is installed, for example, at places 351, 352 after being sealed with an aluminum packaging material.

A packaging sheet (hereinafter referred to simply as the sheet) 212 supplied from a sheet supply unit 213 is formed with cavity 211-1 at regular intervals two-dimensionally. The sheet 212 is conveyed to a drug supply unit 210. In the drug supply unit 210, the pieces of the drug 211 accumulated therein are placed one by one in the cavity 211-1 of the sheets 212 sequentially supplied. Normally, the drug blister packaging machine 300 has 20 to 28 rows of cavity formed transversely of the sheet.

In the transmission method, the sheets 212 with the drugs placed in the cavity 212-1 are conveyed to the place 350 installed with the drug inspection apparatus according to this embodiment. The terahertz radiation of 30 gigahertz to 5 terahertz in frequency is emitted from the terahertz radiation generation unit 14. In the reflection method, on the other hand, the sheets 212 with the drugs placed in the cavity 211-1 are conveyed to the place 351 installed with the drug inspection apparatus according to this embodiment. Then, the terahertz radiation is emitted from the terahertz radiation generation unit 14. In the process, the emission timing of the terahertz radiation from the terahertz radiation generation unit 14 is determined in synchronism with the timing at which the pieces of the drug conveyed arrive at a predetermined position. After that, the pieces of the drug accommodated in the cavity 211-1 of the sheets 212 are discharged from the drug blister packaging machine 300 through a sheet discharge unit 218.

The feature value of the spectrum of the terahertz output radiation after being transmitted through or reflected from the drug is compared with the preset feature value of the drug thereby to determine whether both are coincident with each or not to detect and sort out any substances other than the drug which may exist in the package. In this way, the presence or absence of heterogeneous drugs and/or chemical components can be determined without contact immediately before packaging for all the pieces of the drug.

The feature value is desirably determined by one of the strength of the spectrum, the first order derivatives of the spectrum and the higher-order derivatives of the spectrum or a combination thereof.

The presence or absence of heterogeneous drugs or chemical components may be determined only by one of the strength of the spectrum, the first order derivatives and the higher-order derivatives of the spectrum. The determination using the strength of the spectrum alone, however, may result in the drugs a and b assuming the same. In such a case, a combination of the spectrum with the first order derivatives (gradient) assures accurate determination.

In similar fashion, the first order derivatives (gradient) of the spectrum alone may result in the same tilt of the drugs c and d. In such a case, the determination by a combination with the higher-order derivatives of the spectrum assures positive identification.

By comparative analysis of these feature values, the presence or absence of heterogeneous drugs or chemical components can be accurately determined.

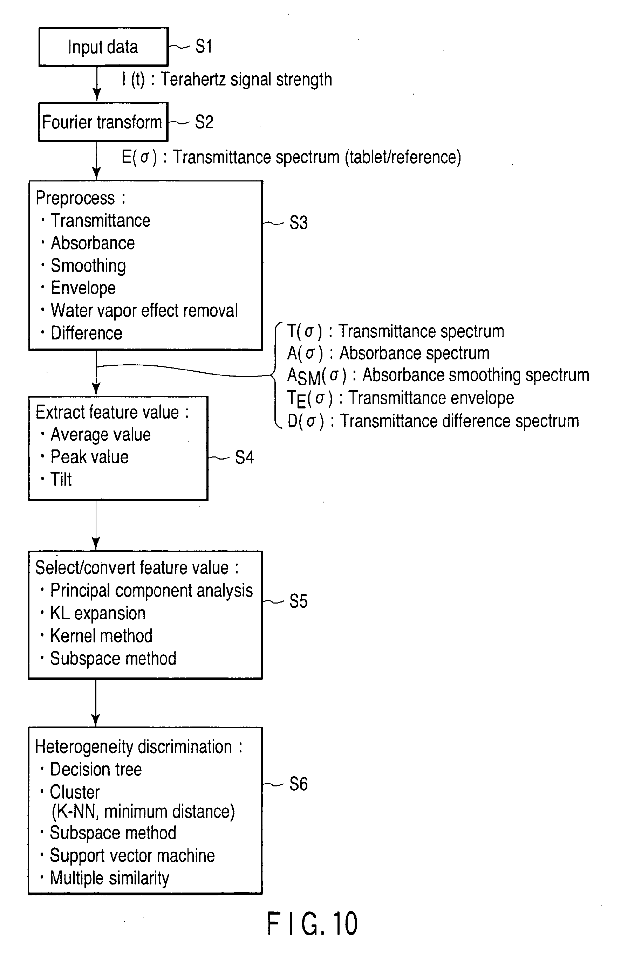

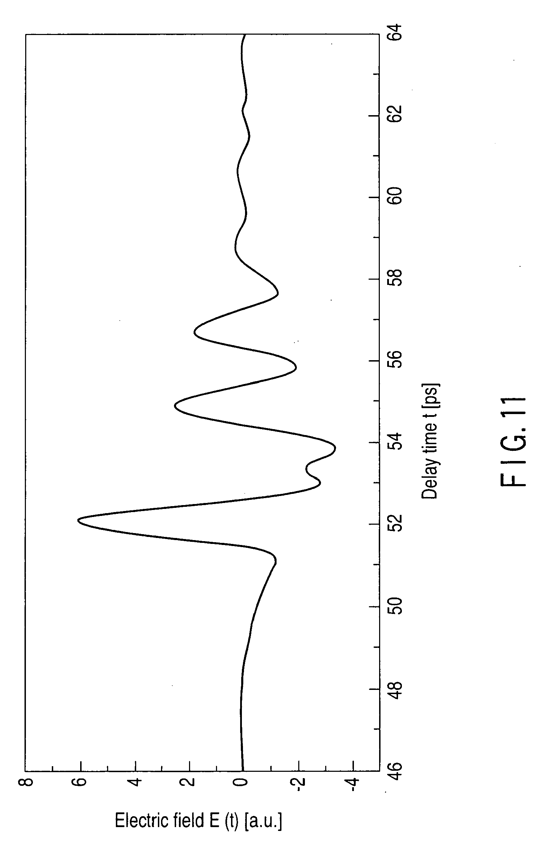

Now, an algorithm for determining the presence or absence of heterogeneous drugs or chemical components will be explained. FIG. 10 shows an outline of the heterogeneity determining algorithm executed at the time of inspection for heterogeneous drugs. In FIG. 10, the electrical signal as shown in FIG. 1 is input as data to the computer 20 (step S1). The abscissa represents the delay time, and the ordinate the field strength. The spectrum of the transmitted light is calculated by Fourier transform of the terahertz signal input (step S2). FIG. 11 shows the spectrum of the field strength of the transmitted light. The abscissa represents the wave number k, and the ordinate the field strength.

Let $E(t)$ be the input terahertz signal, and $I(k)$ the spectrum of the transmitted light. The spectrum $I(k)$ of the transmitted light can be determined from the equation below.

[Equation 1]

$$X(k) = \sum_{t=1}^{N} [I(t) \cdot \exp((-2\pi i / N) \cdot (t-1)(k-1))]$$

$$I(t) = (1/N) \sum_{k=1}^{N} [X(k) \cdot \exp((+2\pi i / N) \cdot (t-1)(k-1))]$$

$$E(k) = (X(k) \cdot X^*(k) / N^2)^{1/2}$$

Next, various preprocesses are executed on the obtained spectrum of the transmitted light (step S3). First, the transmittance spectrum T(k) and the absorbance spectrum A(k) are determined from the equations below based on the spectrum Iref(k) of the reference transmitted light and the spectrum I(k) of the light transmitted through the drug measured.

$$T(k) = I(k)/Iref(k)$$

$$A(k) = (-\log 10(T(k)2))$$

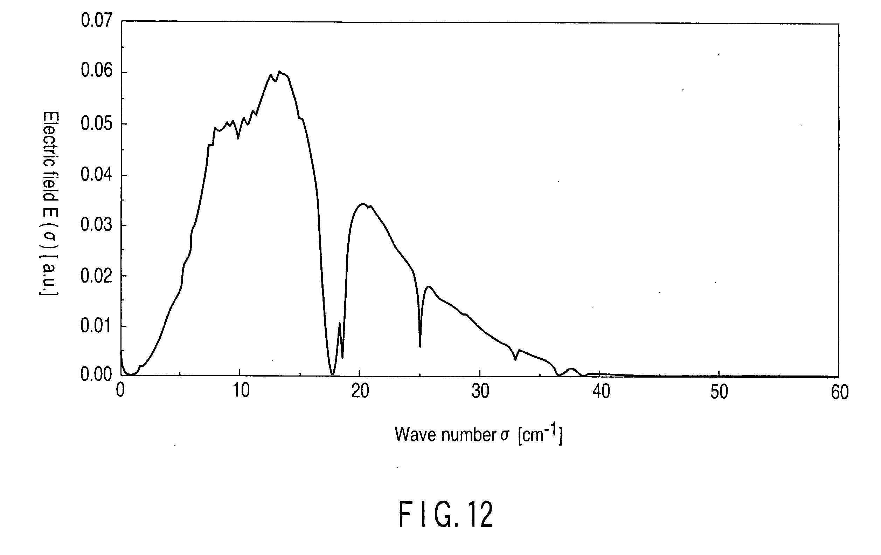

FIG. 12 shows an example of the absorbance spectrum A(k).
Next, in order to remove the noise from the absorbance spectrum A(k) thus determined, the smoothing process is executed in accordance with the steps described below.

[Equation 2]

$$A_{SM}(k) = \sum_{l=-N_{SM}}^{+N_{SM}} p(l) \bullet A(k+l) \ / \ \sum_{l=-N_{SM}}^{N_{SM}} p(l) \begin{cases} k = 1 \sim N \\ l = -N_{SM} \sim +N_{SM} \end{cases}$$

A(k): absorbance spectrum
p(l): weight coefficient
Weight coefficient p(l) may be determined either as a fixed value in advance or dynamically from A(k).

[Equation 3]

$$A_{SM}(k) = b_n, \ N_{SM}: \text{smoothing parameter}$$

The weight p(l) is adjusted in such a manner as to reduce the noise while at the same time leaving the noted feature value of the spectrum in tact.
Next, in order to detect the waveform depression of the spectrum I(k) of the transmitted light thus determined, the spectrum I(k) of the transmitted light is smoothed and the envelope Irefenv(k) thereof is calculated. Next, the absorbance difference spectra D1(k) to Dn(k) are determined.
In this preprocess session, the process of removing the effect of water vapor is executed. A great number of absorption peaks due to water vapor in the atmosphere appear in the spectrum of the terahertz region. By smoothing the transmittance spectrum and the absorbance spectrum, therefore, the effect of water vapor is required to be removed for calculating the feature value.

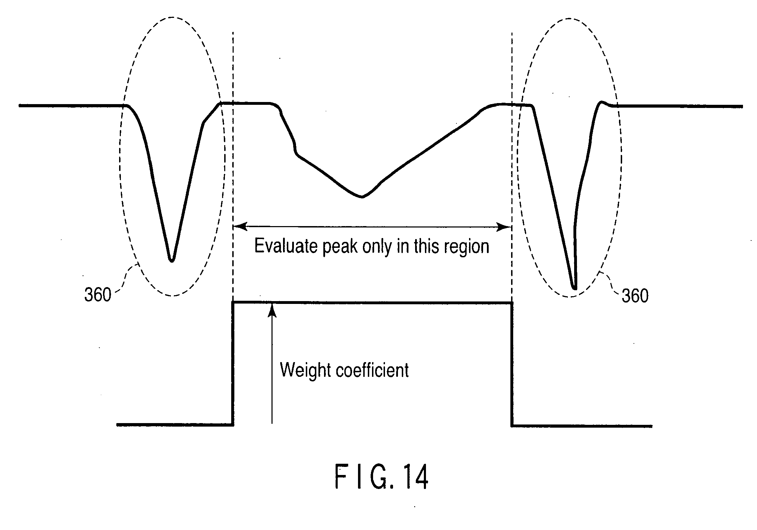

As an image is shown in FIG. 14, the weight coefficient for each wave number is calculated using the water vapor absorption peak appearing in the spectrum of the transmitted light providing a reference. In the subsequent operation of smoothing the transmittance spectrum and the absorbance spectrum, the effect of the water vapor absorption is avoided by using the weight coefficient.

(1) Envelope calculation

A curve Irefenv(k) connecting the spectrum Iref(k) of the reference transmitted light with an envelope is generated.

i) Irefenv(k) = Iref(k) {k = 1, 2, ... , N} (initial value substituted)
ii) The straight line connecting Iref(k) and Iref(k+n) is determined {n = 1, 2, ... , Nenv}

$$y(x) = x/n \cdot (Iref(k+n) - Iref(k)) + Iref(k)$$

iii) Irefenv(k+x) = Max(Irefenv(k+x), y(x))
iv) The calculations of (ii) and (iii) are repeated for k = 1 to (N-Nenv)
v) Irefenv(k) = Irefenv(N-Nenv) {k = N - Nenv + 1 to N}, where Nenv is the envelope parameter.

(2) Calculation of weight coefficient

The weight coefficient is calculated according to the equation below.

[Equation 4]

$$W(k) = (E_{ref}^{env}(k)/E_{ref}^{env}(k))^{Nw},$$

where Nw is the weight coefficient parameter.

$$W(k) = (Irefenv(k)/Irefenv(k))^{Nw},$$

where Nw is the weight coefficient parameter.

Next, the feature values are extracted from the transmittance spectrum T(k), the absorbance spectrum A(k), the absorbance smoothing spectrum ASM(k), the weight coefficients W1(k) to Wn(k) and the absorbance difference spectra D1(k) to Dn(k) determined by the method described above (step S4).

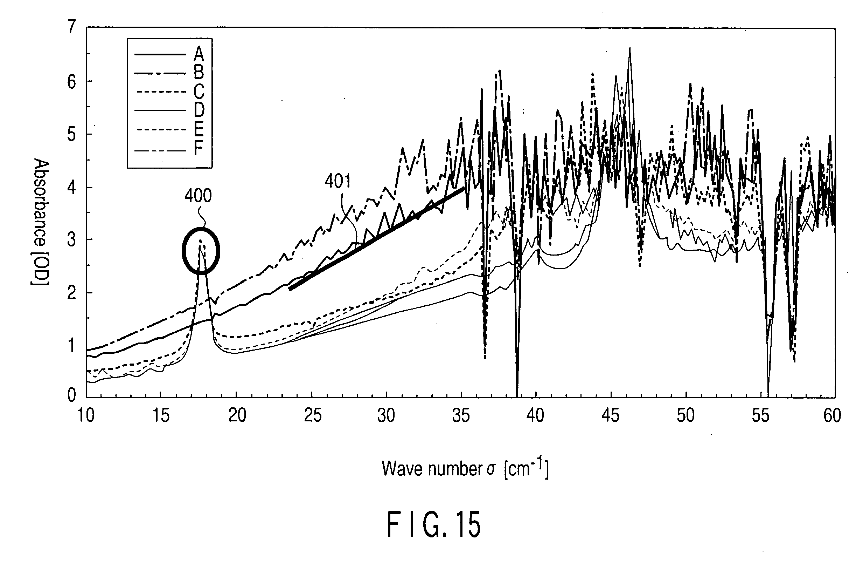

FIG. 15 shows an example of the absorbance spectrum A(k). From this waveform, the feature values including the absorption peak value (0-order derivatives), the gradient of the absorbance spectrum (first order derivatives) and the radius of curvature (higher-order derivatives) can be determined. FIG. 15 shows waveforms for six types of drug.

[Equation 5]

$$D_1(k) = \sum_{l=-N_1}^{N_1} q_1(l) \bullet A(k+l) \bigg/ \sum_{l=-N_1}^{N_1} q_1(l)$$

$q_1(l)$: weight coefficient (first order derivatives)

$$D_2(k) = \sum_{l=-N_2}^{N_2} q_2(k) \bullet A(k+l) \bigg/ \sum_{l=-N_2}^{N_2} q_2(l)$$

$q_2(l)$: weight coefficient (secondary derivatives)

$\cdot \ \cdot \ \cdot \ \cdot \ \cdot \ \cdot \ \cdot \ \cdot \ \cdot \ \cdot \ \cdot \ \cdot \ \cdot \ \cdot \ \cdot \ \cdot$

$$D_n(k) = \sum_{l=-Nn}^{Nn} q_n(l) \bullet A(k+l) \bigg/ \sum_{l=-Nn}^{Nn} q_n(l)$$

$q_n(l)$: weight coefficient (n-th derivatives)

[Equation 6]

$$W_{SM}(k) = min\{W(k+l) \mid l = -N_{SM} \sim N_{SM}\}$$
$$W_1(k) = min\{W(k+l) \| q_1(l) | > 0, l = -N_1 \sim N_1\}$$

$$W_2(k) = min\{W(k+l) \| q_2(l) | > 0, l = -N_1 \sim N_1\}$$
$$\cdot \ \cdot \ \cdot \ \cdot \ \cdot \ \cdot \ \cdot \ \cdot \ \cdot \ \cdot \ \cdot \ \cdot \ \cdot$$

$$W_n(k) = min\{W(k+l) \| q_n(l) | > 0, l = -N_n \sim N_n\}$$

The calculated values of 0- to n-order derivatives of the spectrum are expressed by the spectrum vector [S] described below.

[Equation 7]

$$[S] = \begin{bmatrix} SSM(1) \\ \cdots \cdots \cdots \\ SSM(N) \\ S1(1) \\ \cdots \cdots \cdots \\ S1(N) \\ S2(1) \\ \cdots \cdots \cdots \\ S2(N) \\ \cdots \cdots \cdots \\ \cdots \cdots \cdots \\ \cdots \cdots \cdots \\ Sn(1) \\ \cdots \cdots \cdots \\ Sn(N) \end{bmatrix}$$

[Equation 8]

$$[W] = \begin{bmatrix} WSM(1) & 0 & 0 & 0 & \cdots & 0 & 0 & \cdots & 0 & \cdots & 0 & \cdots & 0 \\ & 0 & & 0 & \cdots & \cdots & \cdots & \cdots & \cdots & \cdots & \cdots & \cdots & \cdots \\ 0 & 0 & WSM(N) & 0 & \cdots & \cdots & \cdots & \cdots & \cdots & \cdots & \cdots & \cdots & \cdots \\ 0 & \cdots & 0 & W1(1) & 0 & \cdots & \cdots & \cdots & \cdots & \cdots & \cdots & \cdots & \cdots \\ \cdots & \cdots & \cdots & 0 & & 0 & \cdots & \cdots & \cdots & \cdots & \cdots & \cdots & \cdots \\ 0 & \cdots & \cdots & \cdots & 0 & W1(N) & 0 & \cdots & \cdots & \cdots & \cdots & \cdots & \cdots \\ 0 & \cdots & \cdots & \cdots & \cdots & 0 & W2(1) & 0 & \cdots & \cdots & \cdots & \cdots & \cdots \\ \cdots & \cdots & \cdots & \cdots & \cdots & \cdots & 0 & & 0 & \cdots & \cdots & \cdots & \cdots \\ 0 & \cdots & \cdots & \cdots & \cdots & \cdots & \cdots & 0 & W2(N) & 0 & \cdots & \cdots & \cdots \\ \cdots & \cdots & \cdots & \cdots & \cdots & \cdots & \cdots & \cdots & 0 & & 0 & \cdots & \cdots \\ 0 & \cdots & \cdots & \cdots & \cdots & \cdots & \cdots & \cdots & \cdots & 0 & Wn(1) & 0 & \cdots \\ \cdots & \cdots & \cdots & \cdots & \cdots & \cdots & \cdots & \cdots & \cdots & \cdots & 0 & & 0 \\ 0 & \cdots & 0 & 0 & \cdots & 0 & 0 & \cdots & 0 & \cdots & 0 & 0 & Wn(N) \end{bmatrix}$$

The weight coefficient is also expressed by the weight coefficient matrix [W] shown below.

Further, the weight coefficient matrix [R] is introduced to determine the feature values.

[Equation 9]

$$[R] = \begin{bmatrix} r11 \ldots \ldots \ldots r1M \\ \cdots \cdots \cdots \cdots \cdots \cdots \\ \cdots \cdots \cdots \cdots \cdots \cdots \\ rL1 \ldots \ldots \ldots rLM \end{bmatrix}$$

$r_{if}$: weight coefficient

M = (n+1)(N: number of dimensions of spectrum vector L: number of feature values

The set of feature values to be determined is designated as vector [F].

[Equation 10]

$$[F] = \begin{bmatrix} f1 \\ f2 \\ \cdots \cdots \\ \cdots \cdots \\ fL \end{bmatrix} : \text{feature value vector}$$

The feature value can be calculated according to the equation below.

[Equation 11]

$$[F] = [R] \cdot [[W] \cdot S]^t$$

As the result of the calculations described above, the geometric parameters such as the radius of curvature and the gradient of the absorbance spectrum for a specified wave number can be determined as the feature values.

Also, the effect of absorption due to water vapor is removed by introducing the weight vector [W].

According to the pattern recognition algorithm using the feature values described above such as the principal component analysis, the KL expansion, the kernel method (support vector machine), the subspace method, the multiple similarity method, the k-NN (the k-nearest neighbor algorithm) and the decision tree method make it easy to determine whether the object to be inspected contains a heterogenous drug.

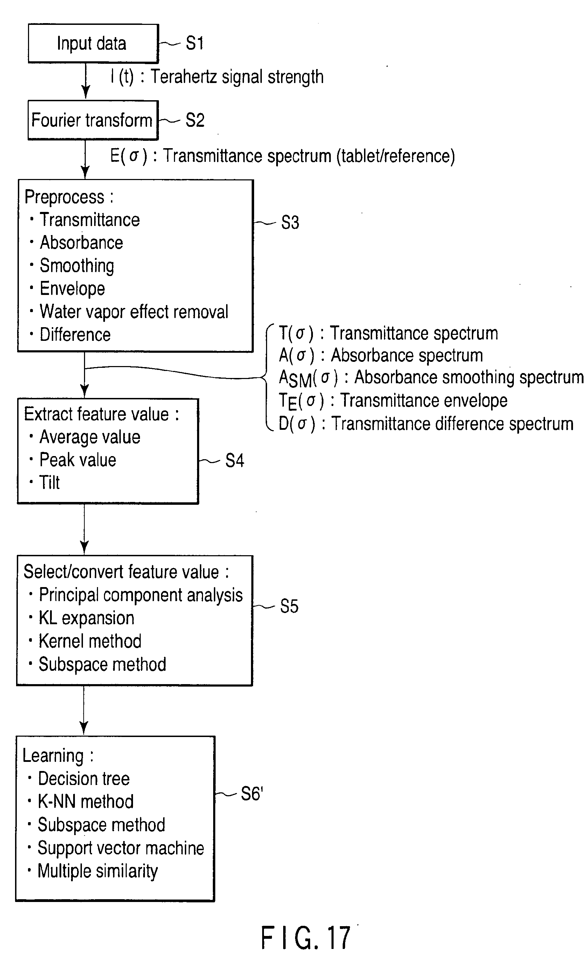

FIG. 17 shows the outline of the heterogeneity learning algorithm for generating a parameter from the training data (learning data) prepared in advance. The heterogeneity learning algorithm executes the training process (step S6') in place of the heterogeneity discrimination (step S6) according to the heterogeneity discrimination algorithm shown in FIG. 10.

According to the embodiment described above, the heterogeneous drugs or chemical components can be positively detected. Also, the intrusion of heterogeneous drugs or chemical components can be accurately discriminated, and therefore, the PL risk against patients can be reduced greatly in the pharmaceutical industry.

Also, it is possible to confirm in the final production process that the composition of all the pieces of the same drug meets a predetermined tolerable range, and therefore, high quality can be maintained.

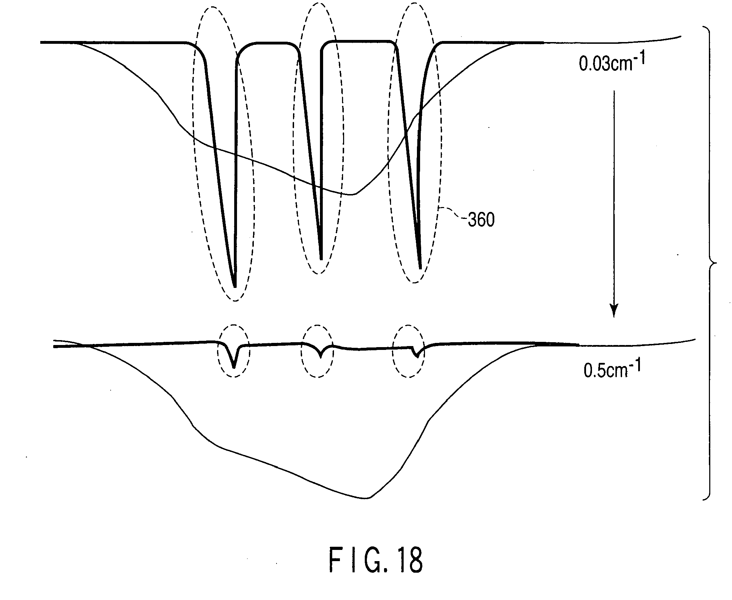

It should be noted that this embodiment concerns a method of removing the effect of water vapor in the numerical operation of the absorption peak due to water vapor in the preprocesses. As another embodiment, however, as shown in FIG. 18, the detection with a different decomposition or the detection with a different decomposition with numerical operation is possible. In this case, the water vapor absorption spectrum forms a stumbling block, and in order to remove this effect efficiently, the spectral resolution is set to a narrower or lower value than the water vapor absorption spectrum width.

(Second embodiment)

A sample inspection apparatus and method according to a second embodiment, like the similar apparatus and method according to the first embodiment, are adapted to conduct the inspection using the drug inspection apparatus shown in FIGS. 1, 8, 19, 20 and 4 to 7. Unlike in the sample inspection apparatus and method according to the first embodiment, however, the shape of the temporal waveform of terahertz radiation is noted, and whether the sample contains heterogeneous or foreign substances is determined from the difference in shape of the temporal waveform of the terahertz output radiation. According to the second embodiment, the operation computer 20 shown in FIGS. 1 and 2 obtains the temporal waveform processed in the electronic circuit 19 and determines whether the drugs sent by the drug conveyor 200 contain heterogeneous drugs or not.

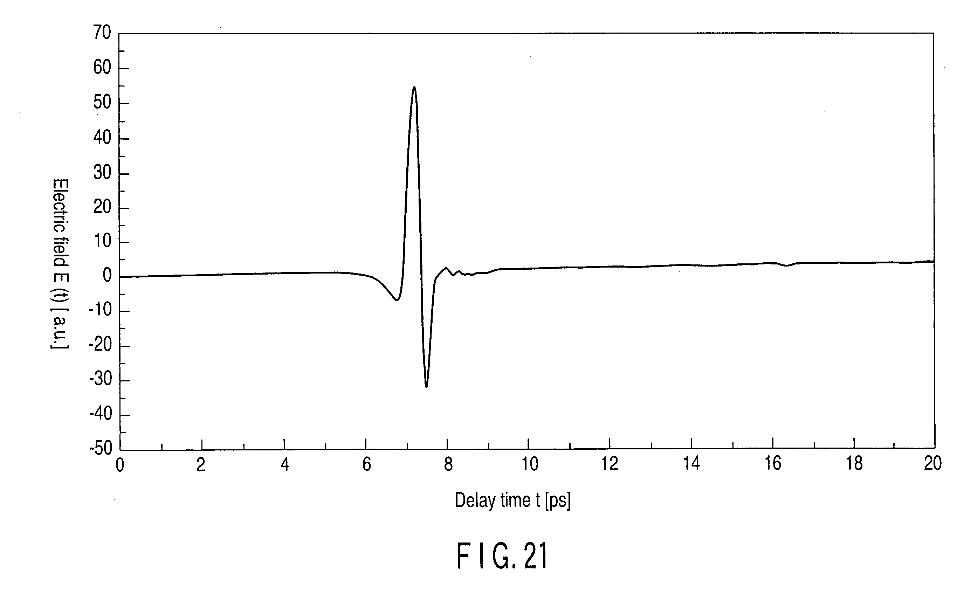

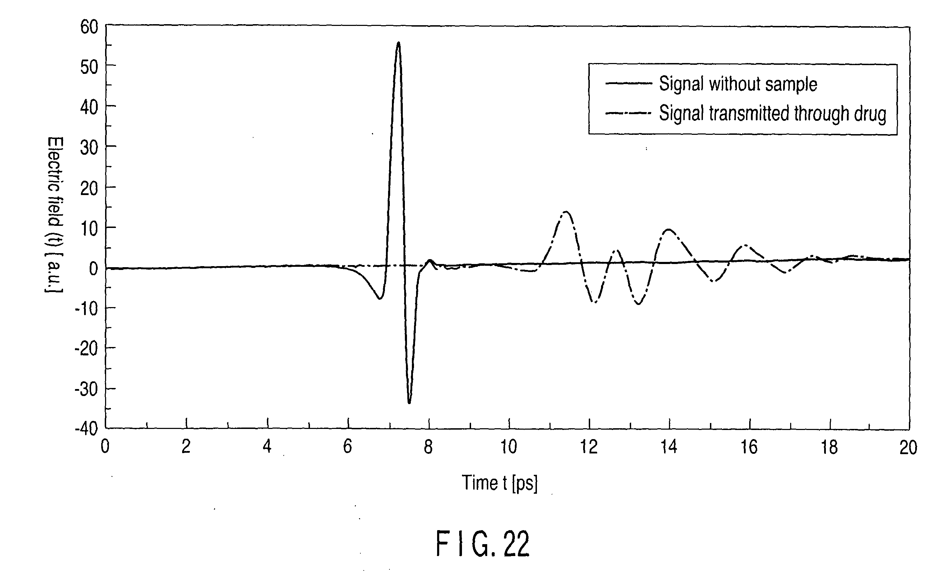

The temporal waveform of the terahertz output radiation, as shown in FIG. 21, for example, assumes the same shape in the case where the drugs having the same composition under the same conditions are measured. Thus, the temporal waveform of the drug shown in FIG. 21 is set in advance, and compared with the temporal waveform of the drug sent from the drug conveyor 200. In the case where this drug contains no heterogeneous or foreign substances, the temporal waveform thereof assumes the same shape as that of FIG. 21, while in the case where heterogeneous or foreign substances are contained therein, the temporal waveform assumes a different shape (the waveform indicated by one-dot chain) as shown in FIG. 22.

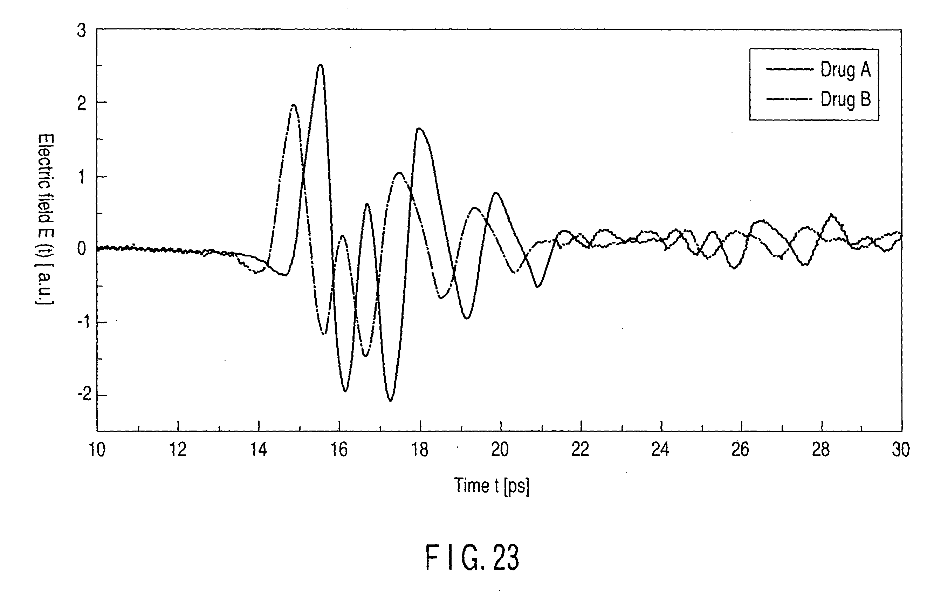

With reference to FIGS. 21 and 22, a case has been explained in which the water vapor in the atmosphere has no effect. In the case where the water vapor in the atmosphere has an effect, on the other hand, as shown in FIG. 23, the shape difference between the two temporal waveforms (indicated by the solid line [drug A] and the one-dot chain [drug B]) may be ambiguous. Determination as to whether the temporal waveforms have the same shape or not uses the analysis method such as the Mahalanobis-Taguchi System (MTS) whereby even a minor difference can be analyzed and discriminated. According to the MTS method, a reference pattern is stored in the computer in advance and the degree of similarity of an object pattern to the reference pattern is determined in terms of Mahalanobis distance. Specifically, based on the expectation value and the distribution data from the statistical distribution of feature values, the particular object is determined as identical in the case where all the feature values are existent within a range determined from the expectation value in the distribution. Using this analysis method, the preset temporal waveform of a drug and the temporal waveform of the drug sent from the drug conveyor 200 are analyzed and discriminated by pattern recognition. It should be noted that an analysis method other than MTS may be used with equal effect.

Next, the specific process flow of the second embodiment will be explained mainly about the parts different from the first embodiment with reference to FIG. 9.

In the transmission method, the sheet 212 each accommodating the drug in the cavity 211-1 shown in FIG. 9 are conveyed to the place 350 of installation of the drug inspection apparatus according to this embodiment. Then, the drug is irradiated with the terahertz radiation of frequency 30 gigahertz to 5 terahertz by the terahertz radiation generation unit 14. In the reflection method, on the other hand, the sheet 212 accommodating the drug in each cavity 211-1 is similarly conveyed to the place 351 of installation of the drug inspection apparatus according to this embodiment, and then irradiated with the terahertz radiation by the terahertz radiation generation unit 14. In the process, the timing of the terahertz radiation emission from the terahertz radiation generation unit 14 is determined in synchronism with the timing at which the drug conveyed reaches a predetermined position. After that, the drug accommodated in each cavity 211-1 of the sheet 212 is discharged from the PAT packaging machine 300 through the sheet discharge unit 218.

Then, the temporal waveform of the terahertz output radiation reflected from or transmitted through the drug and the preset temporal waveform of the drug are analyzed and determined by pattern recognition using the analysis method such as MTS as to whether both temporal waveforms of the drug coincide with each other, thereby detecting and sorting out the objects other than the drug to be packaged. In this way, the presence or absence of heterogeneous drugs or chemical components can be determined immediately before the packaging process without contact for all the pieces of the drug.

According to the embodiment described above, heterogeneous drugs or chemical components can be positively detected. Also, the intrusion of heterogeneous drugs or chemical components can be accurately determined, and therefore, the PL risk on the part of patients can be greatly reduced in the pharmaceutical industry.

Also, it is possible to confirm in the final production process that the components of all the pieces of the same drug meet a predetermined range of tolerance at the same time. Therefore, high quality can be maintained.

Industrial Applicability

According to the invention, heterogeneous or foreign substances, if contained in a sample, can be positively detected.

**Claims**

1. A sample inspection apparatus comprising:

   a terahertz radiation generation unit which generates light rays of terahertz radiation;
   an optical system which guides the terahertz radiation generated by the terahertz radiation generation unit to a sample as an object to be inspected;
   a detection unit which detects terahertz output radiation transmitted through or reflected from the sample as an electrical signal; and
   a determination unit which determines a spectrum from the electrical signal detected by the detection unit, and determines whether the sample contains heterogeneous or foreign substances based on the particular spectrum and another predetermined spectrum (fingerprint spectrum) due to a component unique to the sample.

2. The sample inspection apparatus according to claim 1,
   wherein the determination unit compares a feature value extracted from the determined spectrum (fingerprint spectrum) with a feature value extracted from the predetermined spectrum (fingerprint spectrum) and based on the comparison result, determines whether the sample contains heterogeneous or foreign substances or not.

3. The sample inspection apparatus according to claim 2,
   wherein the feature value is selected one or any combination of strength of the spectrum, a value of the spectrum obtained by first order derivatives and a value of the spectrum obtained by higher-order derivatives.

4. The sample inspection apparatus according to claim 1,
   wherein the determination unit determines whether the sample contains heterogeneous or foreign substances or not by pattern recognition of the determined spectrum (fingerprint spectrum) and the predetermined spectrum (fingerprint spectrum).

5. The sample inspection apparatus according to any one of claims 1 to 4,
   wherein the terahertz radiation generation unit generates the light rays of the terahertz radiation as a converged light flux, and the optical system converges the light flux onto the sample.

6. The sample inspection apparatus according to any one of claims 1 to 4,
   wherein the terahertz radiation generation unit generates the light rays of the terahertz radiation as parallel light flux, and the optical system guides the parallel light flux to the sample as it is.

7. The sample inspection apparatus according to claim 6,
   wherein the terahertz radiation generation unit directs the light rays of the terahertz radiation sideways through a plurality of samples.

8. The sample inspection apparatus according to any one of claims 1 to 7,
   wherein the detection unit detects the terahertz output radiation by spectral resolution narrower than an absorption spectrum of water vapor in the air.

9. The sample inspection apparatus according to any one of claims 1 to 7,
   wherein the detection unit detects the terahertz output radiation by spectral resolution wider than an absorption spectrum of water vapor in the air.

10. The sample inspection apparatus according to any one of claims 2, 3 and 5 to 9,
    wherein the determination unit removes an effect of an absorption peak of the water vapor from the determined spectrum at the time of calculating the feature value.

11. The sample inspection apparatus according to any one of claims 1 to 10,

wherein the sample is moved in a predetermined direction by a conveyor unit.

12. A sample inspection method comprising the steps of:

generating light rays of terahertz radiation from a terahertz radiation generation unit;
guiding, by an optical system, the terahertz output radiation generated by the terahertz radiation generation unit to a sample as an object to be inspected;
detecting, by a detection unit, the terahertz radiation transmitted through or reflected from the object as an electrical signal; and
determining, by a determination unit, a spectrum from the electrical signal detected by the detection unit and based on the particular spectrum and another predetermined spectrum (fingerprint spectrum) due to a component unique to the sample, determining whether the sample contains heterogeneous or foreign substances.

13. The sample inspection method according to claim 12,
wherein the determination step compares a feature value extracted from the determined spectrum (fingerprint spectrum) with a feature value extracted from the predetermined spectrum (fingerprint spectrum) and based on the comparison result, determines whether the sample contains heterogeneous or foreign substances or not.

14. The sample inspection method according to claim 12,
wherein the feature value is defined as selected one or any combination of strength of the spectrum, a value of the spectrum obtained by first order derivatives and a value of the spectrum obtained by higher-order derivatives.

15. The sample inspection method according to claim 12,
wherein the determination step determines whether the sample contains heterogeneous or foreign substances or not by pattern recognition of the determined spectrum and the predetermined spectrum.

16. The sample inspection method according to any one of claims 12 to 15,
wherein the terahertz radiation generation step generates the light rays of the terahertz radiation as a converged light flux, and the optical system converges the light flux onto the sample.

17. The sample inspection method according to any one of claims 12 to 15,
wherein the terahertz radiation generation step generates the light rays of the terahertz radiation as parallel light flux, and the optical system guides the parallel light flux to the sample as it is.

18. The sample inspection method according to claim 17,
wherein the terahertz radiation generation step directs the light rays of the terahertz radiation sideways through a plurality of samples.

19. The sample inspection method according to any one of claims 12 to 18,
wherein the detection step detects the terahertz output radiation by spectral resolution narrower than an absorption spectrum of water vapor in the air.

20. The sample inspection method according to any one of claims 12 to 18,
wherein the detection step detects the terahertz output radiation by spectral resolution wider than an absorption spectrum of water vapor in the air.

21. The sample inspection method according to any one of claims 13, 14 and 16 to 20,
wherein the determination step removes an effect of an absorption peak of the water vapor from the determined spectrum at the time of calculating the feature value.

22. The sample inspection method according to any one of claims 12 to 21,
wherein the sample is moved in a predetermined direction by a conveyor unit.

23. The sample inspection apparatus according to claim 5 or 6,
wherein the optical system includes a plurality of optical elements arranged in matrix to guide the light rays of the terahertz radiation to the samples arranged in a plurality of lines.

24. A sample inspection apparatus comprising:

a terahertz radiation generation unit which generates light rays of terahertz radiation;

an optical system which guides the terahertz radiation generated by the terahertz radiation generation unit to a sample as an object to be inspected;

a detection unit which detects terahertz output radiation transmitted through or reflected from the sample as an electrical signal; and

a determination unit which determines by analysis whether the sample contains heterogeneous or foreign substances, based on a temporal waveform of the electrical signal detected by the detection unit and a predetermined temporal waveform indicating a component unique to the sample.

25. The sample inspection apparatus according to claim 24,
wherein the determination unit determines whether the sample contains heterogeneous or foreign substances or not by pattern recognition of the shape of the temporal waveform of the electrical signal detected by the detection unit and the shape of the predetermined temporal waveform indicating the component unique to the sample.

26. The sample inspection apparatus according to claim 24 or 25,
wherein the terahertz radiation generation unit generates the light rays of the terahertz radiation as a converged light flux, and the optical system converges the light flux onto the sample.

27. The sample inspection apparatus according to claim 24 or 25,
wherein the terahertz radiation generation unit generates the light rays of the terahertz radiation as parallel light flux, and the optical system guides the parallel light flux to the sample as it is.

28. The sample inspection apparatus according to claim 24 or 25,
wherein the sample is moved in a predetermined direction by a conveyor unit.

29. A sample inspection method comprising the steps of:

generating light rays of terahertz radiation from a terahertz radiation generation unit;

guiding, by an optical system, the terahertz output radiation generated by the terahertz radiation generation unit to a sample as an object to be inspected;

detecting, by a detection unit, the terahertz radiation transmitted through or reflected from the object as an electrical signal; and

determining by analysis, by a determination unit, whether the sample contains heterogeneous or foreign substances, based on a temporal waveform of the electrical signal detected by the detection unit and a predetermined temporal waveform indicating a component unique to the sample.

30. The sample inspection method according to claim 29,
wherein the determination step determines whether the sample contains heterogeneous or foreign substances or not by pattern recognition of the temporal waveform of the electrical signal detected in the detection step and the predetermined temporal waveform indicating the component unique to the sample.

31. The sample inspection method according to claim 29 or 30,
wherein the terahertz radiation generation step generates the light rays of the terahertz radiation as a converged light flux, and the optical system converges the light flux onto the sample.

32. The sample inspection method according to claim 29 or 30,
wherein the terahertz radiation generation step generates the light rays of the terahertz radiation as parallel light flux, and the optical system guides the parallel light flux to the sample as it is.

33. The sample inspection method according to claim 29 or 30,
wherein the sample is moved in a predetermined direction by a conveyor unit.

F I G. 1

F I G. 2A

F I G. 2B

Sugar-coated tablet                                    Sugar coating

Drug portion

FIG. 3A

30

Thick    Thin

30

Thick

Thin

FIG. 3B

14

30

16

F I G. 4A

14

16

30

16

F I G. 4B

F I G. 4C

F I G. 5

14 — 30 — 16

Convey

F I G. 6A

30 — 14 — 16 — 30

Convey

F I G. 6B

14 — 30 — 16

Convey

F I G. 6C

EP 2 042 855 A1

F I G. 7A

Direction of conveyance

F I G. 7B

Direction of conveyance

25

F I G. 8

F I G. 9

EP 2 042 855 A1

Input data ~ S1

| (t) : Terahertz signal strength

Fourier transform ~ S2

E(σ) : Transmittance spectrum (tablet/reference)

Preprocess :
· Transmittance
· Absorbance
· Smoothing
· Envelope
· Water vapor effect removal
· Difference

~ S3

T(σ) : Transmittance spectrum
A(σ) : Absorbance spectrum
A$_{SM}$(σ) : Absorbance smoothing spectrum
T$_E$(σ) : Transmittance envelope
D(σ) : Transmittance difference spectrum

Extract feature value :
· Average value
· Peak value
· Tilt

~ S4

Select/convert feature value :
· Principal component analysis
· KL expansion
· Kernel method
· Subspace method

~ S5

Heterogeneity discrimination :
· Decision tree
· Cluster
  (K-NN, minimum distance)
· Subspace method
· Support vector machine
· Multiple similarity

~ S6

FIG. 10

FIG. 11

F I G. 12

F I G. 13

EP 2 042 855 A1

FIG. 14

F I G. 15

F I G. 16A

F I G. 16B

Input data — S1

I (t) : Terahertz signal strength

Fourier transform — S2

E($\sigma$) : Transmittance spectrum (tablet/reference)

Preprocess :
· Transmittance
· Absorbance
· Smoothing
· Envelope
· Water vapor effect removal
· Difference
— S3

$\begin{cases} T(\sigma) : \text{Transmittance spectrum} \\ A(\sigma) : \text{Absorbance spectrum} \\ A_{SM}(\sigma) : \text{Absorbance smoothing spectrum} \\ T_E(\sigma) : \text{Transmittance envelope} \\ D(\sigma) : \text{Transmittance difference spectrum} \end{cases}$

Extract feature value :
· Average value
· Peak value
· Tilt
— S4

Select/convert feature value :
· Principal component analysis
· KL expansion
· Kernel method
· Subspace method
— S5

Learning :
· Decision tree
· K-NN method
· Subspace method
· Support vector machine
· Multiple similarity
— S6'

F I G. 17

FIG.18

EP 2 042 855 A1

22

Optical system

16-5　16-N　16-1　16-4　16

20

Operation computer

Computer system
with analog-to-digital
converter and
I/O converter

16-3

Detector

200

10

14-1

Oscillator

14-N

30

Femtosecond laser
controller

14

14-2　14-3　14-4

11-2

11-3

Tiller

Femtosecond
laser
oscillator

12

Optical delay unit

18

19-1

Clock reading circuit

Drive control circuit

19-2

11

11-1

217

Detection signal
system circuit

19-3

Modulation circuit

19-4

Electronic circuit

19

FIG.19

FIG. 20

F I G. 21

FIG. 22

F I G. 23

EP 2 042 855 A1

<table>
<tr><td colspan="2">**INTERNATIONAL SEARCH REPORT**</td><td>International application No.<br>PCT/JP2007/062825</td></tr>
</table>

| A. | CLASSIFICATION OF SUBJECT MATTER |
|---|---|

*G01N21/35*(2006.01)i

According to International Patent Classification (IPC) or to both national classification and IPC

| B. | FIELDS SEARCHED |
|---|---|

Minimum documentation searched (classification system followed by classification symbols)
G01N21/00-G01N21/61

Documentation searched other than minimum documentation to the extent that such documents are included in the fields searched

| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)
WPI, IEEE, JSTPlus(JDream2), Science Citation Index Expanded
(Web of Science)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | US 2006/0000470 A1 (A.J. Clarke),<br>05 January, 2006 (05.01.06),<br>Par. Nos. [0114], [0153], [0160], [0240] to [0241] | 1-23,28,33 |
| Y | JP 11-352072 A (Advantest Corp.),<br>24 December, 1999 (24.12.99),<br>Par. Nos. [0095] to [0097] | 1-23 |
| Y | JP 8-320254 A (AT & T CORP.),<br>03 December, 1996 (03.12.96),<br>Figs. 1, 4, 6 | 5-7,16-18,<br>23,26,31 |
| Y | JP 2004-500546 A (TERAVIEW LTD.),<br>08 January, 2004 (08.01.04),<br>Par. No. [0160] | 10,21 |

| ☒ Further documents are listed in the continuation of Box C. | ☒ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>12 July, 2007 (12.07.07) | Date of mailing of the international search report<br>31 July, 2007 (31.07.07) |
|---|---|
| Name and mailing address of the ISA/<br>Japanese Patent Office | Authorized officer |
| Facsimile No. | Telephone No. |

Form PCT/ISA/210 (second sheet) (April 2005)

**EP 2 042 855 A1**

## INTERNATIONAL SEARCH REPORT

International application No.

PCT/JP2007/062825

C (Continuation). DOCUMENTS CONSIDERED TO BE RELEVANT

| Category* | Citation of document, with indication, where appropriate, of the relevant passages | Relevant to claim No. |
|---|---|---|
| <u>X</u> | JP 2001-066375 A (Director General of Communications Research Laboratory), 16 March, 2001 (16.03.01), Par. Nos. [0016] to [0025]; Fig. 1 | <u>24-25,27,</u> <u>29-30,32</u> |
| Y | | 26,28,31,33 |
| A | JP 2005-114413 A (S.I Seiko Co., Ltd.), 28 April, 2005 (28.04.05), Par. Nos. [0004] to [0005], [0017], [0055] to [0063] | 1,12,24,29 |

Form PCT/ISA/210 (continuation of second sheet) (April 2005)

## INTERNATIONAL SEARCH REPORT

| International application No. |
| --- |
| PCT/JP2007/062825 |

---

**Box No. II     Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

---

**Box No. III     Observations where unity of invention is lacking (Continuation of item 3 of first sheet)**

This International Searching Authority found multiple inventions in this international application, as follows:

    Claims 1 - 23 relate to an inspection based on the spectrum of tera-hertz waves, and claims 24 - 33 relate to an inspection based on the time-series waveform of tera-hertz waves.

    These inventions cannot be considered so relative as to form a single general inventive concept, since they are not so technically related as to involve one or two or more of the same or corresponding special technical features.

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

| | | |
| --- | --- | --- |
| **Remark on Protest**<br><br>the | ☐ | The additional search fees were accompanied by the applicant's protest and, where applicable, payment of a protest fee.. |
| | ☐ | The additional search fees were accompanied by the applicant's protest but the applicable protest fee was not paid within the time limit specified in the invitation. |
| | ☐ | No protest accompanied the payment of additional search fees. |

Form PCT/ISA/210 (continuation of first sheet (2)) (April 2005)

**INTERNATIONAL SEARCH REPORT**
Information on patent family members

International application No.

PCT/JP2007/062825

| | | | |
|---|---|---|---|
| US 2006/000470 A1 | 2006.01.05 | AR 049080 A1 | 2006.06.21 |
| | | AU 2005254510 A1 | 2005.12.29 |
| | | CA 2569976 A1 | 2005.12.29 |
| | | CA 2570037 A1 | 2005.12.29 |
| | | EP 1756535 A2 | 2007.02.28 |
| | | EP 1773708 A2 | 2007.04.18 |
| | | NO 20066051 A | 2007.03.02 |
| | | US 2006/001866 A1 | 2006.01.05 |
| | | US 2006/002594 A1 | 2006.01.05 |
| | | US 2006/002986 A1 | 2006.01.05 |
| | | US 2006/016830 A1 | 2006.01.26 |
| | | US 2006/017916 A1 | 2006.01.26 |
| | | WO 2005/123569 A2 | 2005.12.29 |
| | | WO 2005/124297 A2 | 2005.12.29 |
| | | | |
| JP 11-352072 A | 1999.12.24 | (Family: none) | |
| | | | |
| JP 8-320254 A | 1996.12.03 | DE 69630065 T2 | 2004.07.08 |
| | | EP 727671 A2 | 1996.08.21 |
| | | EP 727671 A3 | 1997.03.05 |
| | | EP 727671 B1 | 2003.09.24 |
| | | EP 828162 A2 | 1998.03.11 |
| | | EP 828162 A3 | 1998.08.19 |
| | | JP 3387721 B2 | 2003.03.17 |
| | | JP 10-090174 A | 1998.04.10 |
| | | US 5623145 A | 1997.04.22 |
| | | US 5710430 A | 1998.01.20 |
| | | | |
| JP 2004-500546 A | 2004.01.08 | AU 776886 B2 | 2004.09.23 |
| | | AU 5094300 A | 2000.12.28 |
| | | EP 1190234 A1 | 2002.03.27 |
| | | GB 2350673 A | 2000.12.06 |
| | | GB 2350673 B | 2001.05.23 |
| | | US 6828558 B1 | 2004.12.07 |
| | | WO 00/75641 A1 | 2000.12.14 |
| | | | |
| JP 2001-066375 A | 2001.03.16 | (Family: none) | |
| | | | |
| JP 2005-114413 A | 2005.04.28 | (Family: none) | |

Form PCT/ISA/210 (patent family annex) (April 2005)

**REFERENCES CITED IN THE DESCRIPTION**

**Patent documents cited in the description**

- JP 2005114413 A